# EUROPEAN PATENT SPECIFICATION

(11) **EP 4 176 345 B1**
(45) Date of publication and mention of the grant of the patent: **11.12.2024**
(21) Application number: 21749742.9
(22) Date of filing: 16.06.2021
(51) Int. Cl.: G06F 3/06

(54) **FULLY COHERENT EFFICIENT NON-LOCAL STORAGE CLUSTER FILE SYSTEM**
VOLLKOHÄRENTES EFFIZIENTES DATEISYSTEM MIT NICHTLOKALEM SPEICHERCLUSTER
SYSTÈME DE FICHIERS DE GRAPPE DE STOCKAGE NON LOCAL EFFICACE ENTIÈREMENT COHÉRENT

(30) Priority: 01.07.2020 US 202016918822
(43) Date of publication of application: 10.05.2023
(73) Proprietor: Oracle International Corporation, Redwood Shores, CA 94065 (US)
(72) Inventor: GRAVES, JR., Donald Allan, Redwood Shores, CA 94065 (US); BRUNELLE, Alan David, Redwood Shores, CA 94065 (US); GLOVER, Frederick S., Redwood Shores, CA 94065 (US)
(74) Representative: Keller Schneider Patentanwaltsgesellschaft mbH
(86) International application number: PCT/US2021/037532
(87) International publication number: WO 2022/005744

(56) References cited:
- KR-A- 20120 009 800
- US-A1- 2011 040 792
- US-A1- 2015 169 612
- CRISTINA L ABAD ET AL: "DARE: Adaptive Data Replication for Efficient Cluster Scheduling", CLUSTER COMPUTING (CLUSTER), 2011 IEEE INTERNATIONAL CONFERENCE ON, IEEE, 26 September 2011 (2011-09-26), pages 159 - 168, XP032066036, ISBN: 978-1-4577-1355-2, DOI: 10.1109/CLUSTER.2011.26
- RAGUNATHAN T ET AL: "Frequent block access pattern-based replication algorithm for cloud storage systems", 2015 EIGHTH INTERNATIONAL CONFERENCE ON CONTEMPORARY COMPUTING (IC3), IEEE, 20 August 2015 (2015-08-20), pages 7 - 12, XP032825604, ISBN: 978-1-4673-7947-2, [retrieved on 20151203], DOI: 10.1109/IC3.2015.7346644

## Description

### FIELD OF THE INVENTION

The present invention relates to managing replication of data across multiple storage nodes using a heatmap of access activity.

### BACKGROUND

For file clustering, there are various ways that shared storage and cluster membership is managed. Some ways use shared storage and fully connected interconnects to provide a fully connected cluster. Other cluster types involve local storage and loosely connected clusters. These allow for the expansion of a cluster beyond what a fully connected cluster typically provides, but may have different semantics for presentation of data.

At the filesystem level, a distributed filesystem can be implemented in at least two ways:
- No coherence - files are fully replicated to each machine, preventing the total storage of the cluster from being larger than a single machine's storage. No machine is aware of another machine's updates to a particular file. If two machines modify a file at the same time, then the last modification wins.
- Limited coherence - files are replicated to subsets of machines, allowing for the storage of the cluster to be larger than the storage of any one particular machine. Machines are aware of other machine's modifications, but no distributed locking or other mechanism is provided to prevent two machines from modifying the same file at the same time, Thus, last modification wins.

In general, distributed filesystems have two unfortunate characteristics:
- Slow access for non-local files, as files must be transferred to the node accessing them, or the client must be redirected to the node hosting the files.
- An inability to track access patterns across the cluster due to the loose cluster coherence of the clustered servers.

Current solutions have various respective drawbacks such as:
- Lacking or limited portable operating system interface (POSIX) compliance;
- Two-step replication - only after data is written to disk, it is replicated. Most replication implementations use remote synchronization (rsync). Rsync has three major drawbacks: a) only whole files are supported, b) an extra network round trip is needed to detect which portions of a file have changed, and c) a timestamp of the file has one second clock resolution, meaning that two machines must not change different portions of a same file in a same clock second because a same timestamp is assumed to indicate a same change;
- Inefficient replication - the whole file is replicated regardless of which data blocks changed;
- Inability to react to access on local nodes - no adjustments for access patterns;
- In some scenarios, common protocols such as NFS are not available - clients must use special translator libraries to speak the language of the distributed filesystem; and
- Only useful in certain scenarios - not general purpose. Data and access patterns must be just right, or the benefits must outweigh the drawbacks for this to be useful in a particular scenario.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

The paper by Ranjit Noronha et al., Designing NFS With RDMA for Security, Performance and Scalability, 2007 International Conference on Parallel Processing (ICPP 2007), discusses design principles for implementing NFS/RDMA protocols. An alternate design for NFS/RDMA on InfiniBand is proposed. Performance bottlenecks of using RDMA operations in NFS protocols are evaluated, and strategies and designs are proposed that are said to tackle these overheads.

The paper by T. Ragunathan, "Frequent block access pattern-based replication algorithm for cloud storage systems", 2015 Eighth International Conference on Contemporary Computing (IC3), discloses replication as a strategy in which multiple copies of the same data are stored at multiple sites. A replication algorithm for cloud storage systems is proposed which decides a replication factor for a file block based on a frequent block access pattern and a placement of that file block based on a local support value.

US 2015/0169612 A1 discloses a distributed file system in which a number of replicas of a file is set to two or more replicas. A computer sets a timer to track a time since a last access to the file, wherein the replicas of the file are distributed across two or more nodes within the distributed file system. Responsive to an access to the file prior to the timer reaching a first timer window threshold, the computer resets the timer. Responsive to the timer reaching the first timer window threshold, the computer automatically reduces a number of replicas of the file within the distributed file system, wherein the probability that the file will be accessed prior to the first timer window threshold is greater than the probability that the file will be accessed after the first timer window threshold.

US 2011/0040792 A1 discloses a data center with multiple storage nodes. The data center employs a distributed file system that allows each file to be independently replicated by a factor specified on a per-file basis. It is said to be generally desirable to provide more replicas of relatively popular documents, wherein the "popularity" used for determining a replication value can be determined by tracking accesses to a published object. In an example configuration, read and write access types are distinguished when obtaining statistical data. Based on a relative frequency of read and write accesses, a replication number can be set such that a greater number of write accesses relative to read accesses reduces the number of object replicas whilst a lower number of write accesses relative to read accesses will result in an increased number of object replicas.

The paper by Cristina L. Abad et al., "DARE: Adaptive data replication for efficient cluster scheduling", 2011 IEEE International Conference on Cluster Computing (CLUSTER), discloses adaptive replication schemes which seek to increase data locality by replicating "popular" data while keeping a minimum number of replicas for unpopular data. According to a greedy approach, dynamic replication logic at a node/slave is performed whenever a non-data-local map task is scheduled. If a replication budget will be exceeded, then a victim block is marked for deletion. In any case, a data block is inserted at the local data node, the data block is added to a set of dynamically replicated blocks, and budget use is increased by a number of bytes in the data block.

### SUMMARY

The present invention is defined by the independent claims. The dependent claims concern optional features of some embodiments of the invention. Due account shall be taken of any element which is equivalent to an element specified in the claims.

### BRIEF DESCRIPTION OF THE DRAWINGS

In the drawings:
FIG. 1 is a block diagram that depicts an example cluster that, over a communication network or internetwork, replicates data blocks to respective subsets of nodes.
FIG. 2 is a flow diagram that depicts example implementation ways to replicate a data block from one node to another.
FIG. 3 depicts an example sequence of steps that may occur to create and discard replicas of a data block as various scenarios progress and interact.
FIG. 4 depicts an example read lifecycle for a reader node and a data block.
FIG. 5 depicts an example computer process in which replication and a heatmap may affect each other.
FIG. 6 is a block diagram that illustrates a computer system upon which an embodiment of the invention may be implemented;
FIG. 7 is a block diagram that illustrates a basic software system that may be employed for controlling the operation of a computing system.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

### GENERAL OVERVIEW

Combining fully connected clusters herein with local storage provide interesting opportunities such as a cluster whose storage can grow larger than the storage of any one machine in the cluster, but does not require that storage be directly shared between nodes. Clusters herein, when fully interconnected for peer-to-peer data transfer, maintain proper file update modifications and prevent conflicting modifications to a file that would corrupt or lose data. Clusters herein guarantee filesystem consistency between nodes without the overhead of full replication.

Cluster filesystems herein present a logical filesystem that clients can access without having to understand where their files are stored. Techniques herein let storage of clustered servers be combined into a larger logical filesystem that clients access through convenient means such as network filesystem (NFS), Local Access, server message block (SMB), or other methodologies.

Techniques are provided for a clustered filesystem that aggregates local storage of nodes in a cluster to represent a Posix-compliant storage solution with efficient replication of persistent data objects such as files, portions of files, and/or individual data blocks or ranges of data blocks. Replication provides important benefits such as data locality to reduce network traffic and redundancy to avoid data loss. Redundancy can avoid single points of failure that could otherwise hinder a complex system. For example, techniques herein provide high availability (HA) even when an actively involved node experiences a disk crash, a software fault, or exhaustion of a resource such as disk space, scratch memory, or processor or input/output (I/O) bandwidth. Replication may provide reliability, availability, and serviceability (RAS) to high volume or complex systems, in a same or different data centers, such as for a data warehouse, a data grid, or a transactional cluster such as an elastic cloud.

In a clustered filesystem, clients interact with some or all of a plurality of nodes. Each node in the cluster maintains local storage that is logically shared with all of the nodes in the cluster even if not physically shared. For example for replication, techniques herein do not require a cross mounted filesystem such as NFS. Each node implements a cache that can persist a respective subset of the cluster's data blocks. Likewise, each data block is replicated to a respective subset of the cluster's nodes. The subset of nodes that persist replicas of a same data block are known herein as replicate nodes for that data block. Cache coherency is maintained between replicate nodes. That is, each replicate node for a data block maintains a consistent copy of the data block.

In an embodiment, a first node in a cluster of nodes requests access to a range of data blocks from a replicate node of a set of replicate nodes that store copies of the range of data blocks. The set of replicate nodes are configured to store, within their respective local storage, copies of the range of data blocks. The replicate node, in the set of replicate nodes, upon receiving the access request, may provide a copy of the data blocks to the first node. The first node may receive the copy of the range of data blocks. Once received, the first node may persist the copy of the range of data blocks into a local cache on the first node. In an embodiment, the local cache includes volatile and nonvolatile storage, both of which store same data blocks as discussed herein.

Each node, in the cluster of nodes, is enabled with cluster management software configured to manage locks for the range of data blocks and the set of replicate nodes for the range of data blocks. Upon receiving the copy of the range of data blocks, the cluster management software on the first node may record access activity for the range of data blocks in a heatmap of access activity used to track read and write accesses and allocated locks on the range of data blocks. The cluster management software may then determine whether to adjust the number of nodes in the set of replicate nodes configured to store copies of the range of data blocks. In response to determining whether to adjust the number of nodes in the set of replicate nodes for the range of data blocks, the cluster management software may adjust the number of nodes in the set of replicate nodes.

With a distributed lock manager (DLM) layer and a fully-connected cluster, a heatmap of access patterns can be created. If each node requesting access to a file or data block through the DLM layer is assigned a unique identifier (which may be a requirement for DLM), then a map of nodes which most frequently access files or data blocks can be dynamically updated. Read and modify operations can be tracked separately, allowing for the cluster to know where files are accessed most, and in what ways.

These heatmaps can ensure that data is replicated to nodes that use the data most. Various heuristics could be used: For N-Way replication, determine the top N most demanding nodes for a particular range of data blocks of a file - and ensure that all of those top nodes contain a copy of the data. This serves two purposes - creating data redundancy through replication, and keeping data access local for those nodes with greatest demand for data. Other algorithms and/or heuristics can additionally or instead be used with heatmaps to tune the performance of a cluster. For example, artificial intelligence (AI) algorithms, such as Bayesian networks, prediction systems, and other optimized tuning may determine the replication and storage settings for various files or data blocks. One general goal is to enable low-latency writes and low-latency reads, which are opposing concerns in other approaches.

In an embodiment, if the cluster management software determines the number of read access requests for the range of data blocks exceeds a configured threshold, then the cluster management software may increase the number of nodes in the set of replicate nodes. For example, an increase in the number of reads may mean that it is more efficient to have additional copies of the range of data blocks on additional replicate nodes, thereby decreasing latency associated with copying the range of data blocks from one replicate node to a node not in the set of replicate nodes.

Write access requests, however, require the changed data blocks to be copied to each of the replicate nodes in the set of replicate nodes. If the set of replicate nodes is large, then copying the new writes to each of the replicate node may require significant time and resources, thereby increasing latency for other access requests of the range of data blocks. If the cluster management software determines the number of write access requests for the range of data blocks exceeds a configured threshold, then the cluster management software may decrease the number of nodes in the set of replicate nodes in order to decrease the number of writes across the cluster in order to decrease latency.

The heatmap may be used to identify access patterns of ranges of data blocks at specific times, in order to optimize the size of the set of replicate nodes, for the purpose of reducing access latency. In an embodiment, the heatmap is used to enforce minimum replication of each data block such as when a replicate node crashes and is replaced. In an embodiment, the heatmap is used to adjust the minimum replication of a data block such as during and after a demand spike.

In an embodiment, each data block is replicated on a minimum amount of respective replicate nodes of a cluster. A first node requests access to data blocks. Based on the requesting the access, a heatmap is modified, and the data blocks are replicated to the first node. Based on the heatmap, the minimum amount of nodes in the respective replicate nodes for at least one data block is adjusted.

### CLUSTERED FILESYSTEM

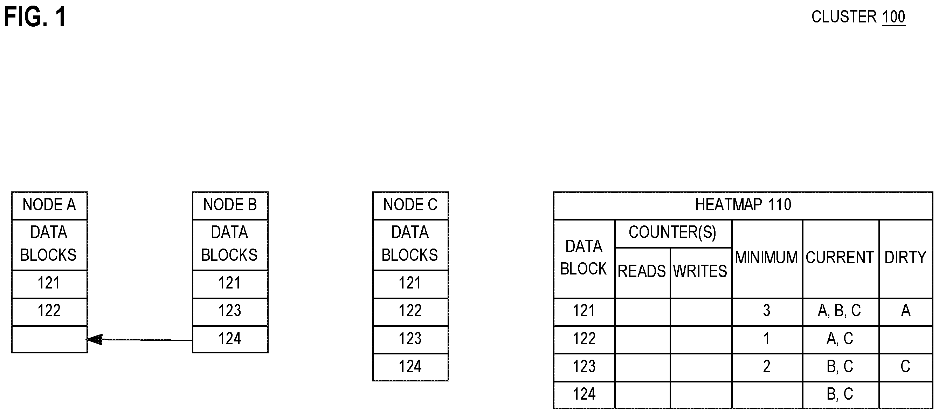

FIG. 1 is a block diagram that depicts an example cluster 100 that, over a communication network or internetwork, replicates data blocks 121-124 to respective subsets of nodes A-C that may be same or different network element types such as a rack server such as a blade, a mainframe, a storage device, a laptop, a smartphone, or a virtual machine (VM). Data blocks 121-124 each has a fixed amount of data storage capacity. In an embodiment, data blocks 121-124 are contiguous or noncontiguous disk blocks of same or different files. In an embodiment, data blocks 121-124 are database blocks and/or are not part of a file.

Data blocks 121-124 may be individually or in various subsets replicated on same or different respective subsets of nodes A-C. For example, data block 121 is replicated on all nodes A-C, while data block 124 is replicated only on nodes B-C. Different nodes may store same or different amounts of data blocks. For example, node C has more data blocks than node A.

Recent access frequencies of respective ranges or individuals of data blocks 121-124 are recorded in heatmap 110 that may reside in volatile or nonvolatile storage of a central server, or one, some, or all of nodes A-C. In the shown embodiment, heatmap 110 has columns that separately count recent reads and writes for each data block, such as during a current period. For example, when any node reads data block 122, the read counter of data block 122 is incremented by one in heatmap 110.

In an embodiment, the heatmap does not have access counter(s) for individual data blocks. For example, there may be access counter(s) shared by multiple data blocks such as: a range of data blocks, data blocks with colliding hash codes, or a range of hash codes of data blocks. For example, a hash function may calculate a hash code for a data block based on an identifier of the data block such as a logical block address (LBA).

In an embodiment, read and/or write counts are reset to zero in heatmap 110 between same or different respective periods. In an embodiment, read and/or write counts are more or less gradually decreased according to same or different linear or non-linear cooling schedules.

In an embodiment, reads and writes affect a same counter. Embodiments of heatmap 110 may contain more or fewer than the shown columns. In an embodiment, some shown columns are additionally or instead contained in software component(s) other than heatmap 110.

As discussed throughout herein, heatmap 110 contains tracking data and metrics that can be used to automatically optimize amounts and locations of replicas to protect data and throughput. Which component(s) in cluster 100 request or perform such automatic replica optimization may depend on the embodiment. In most of the embodiments discussed herein, the sole or primary component to perform automatic replica optimization is a node that currently accesses a data block, which entails inspecting heatmap 110.

In an embodiment, additionally or instead, a lock manager performs automatic replica optimization based on heatmap 110. In an embodiment, heatmap 110 is object oriented to provide both data and behavior such as automatic replica optimization. An advantage of having nodes be responsible for automatic replica optimization is that decentralization may avoid a single point of failure for automatic replication optimization, which makes cluster 100 more robust. In such an embodiment or an embodiment in which the lock manager provides automatic replica optimization, heatmap 110 may be a passive data structure.

Automatic replica optimization may occur at various times in various embodiments. All embodiments may perform automatic replica optimization at important times such as when: a) a data block is locked, accessed, and/or unlocked, or b) when a node crashes or otherwise leaves cluster 100 as discussed later herein. Some embodiments are autonomous and perform automatic replica optimization at additional times according to various schedules, triggers, and/or conditions as discussed later herein such as even when cluster 100 is otherwise idle.

As discussed above, an active node, lock manager, or heatmap 110 may perform automatic replica optimization based on heatmap 110 in various embodiments. Such a component of cluster 100 that does so autonomously is known herein as an autonomous component. Cluster 100 may have one or many autonomous components of same or different kinds. For example in an embodiment, some or all nodes and heatmap 110 may be autonomous components that may have same or different causes and logic for autonomously performing automatic replica optimization.

In an embodiment, during an access to a data block by a node, the node records more than an incremented access count in heatmap 110. In heatmap 110 may also be recorded identifiers of: the accessing node and the data block. In an embodiment, heatmap 110 contains a more or less detailed log of recent accesses of any data blocks by any nodes.

The current column of heatmap 110 indicates subsets of nodes A-C that contain a respective data block of 121-124. For example, all nodes A-C contain data block 121. A node is a replicate node for a data block if the node has locally persisted a replica of the data block. As shown, all nodes A-C are replicate nodes for data block 121, but node A is not a replicate node for data blocks 123-124.

The minimum column of heatmap 110 is used during at various times as discussed later herein. Cluster 100 ensures that each data block is always replicated on at least a minimum amount of replicate nodes. In an embodiment not shown, all data blocks 121-124 have a same minimum amount of replicas. In the shown embodiment, different data blocks have different minimum amounts. For example, data block 122 has more replicas than needed.

Various embodiments may have data access locks of various granularities such as a data block, a range of data blocks, and/or all data blocks in a file. A node should acquire lock(s) when accessing data block(s). In an embodiment, all of nodes A-C may request locks from a lock manager. Various embodiments have a lock manager for all locks or a separate lock manager for each lock. Requests to lock or unlock data block(s) are submitted to a lock manager that is hosted by a central server, or one, some, or all of nodes A-C in various embodiments. In an embodiment, heatmap 110 and a lock manager are a same component.

A node should lock a data block before accessing the data block, regardless of whether or not the data block is already stored locally on the node. A node should always access its local copy of a data block, even if that requires suddenly copying the data block into volatile or nonvolatile storage of the node from volatile or nonvolatile storage of another node. For example as shown, node A copies data block 124 from node B, even though node C could instead provide same data block 124.

For deciding whether node B or C should provide data block 124 to node A, various embodiments may have various criteria such as network topology, workload, and/or performance metrics. In various embodiments, node A or the lock manager or heatmap 110 has logic to decide which replicate node should provide a data block.

Lock semantics are as follows. As shown, there are separate locks for different access types such as reads and writes. In an embodiment, deletion of data block(s) such as file truncation is an example of a write. A write lock provides exclusive access to one node. As shown in the lock column, "W: A" means that node A has data block 121 write locked. In an embodiment, the lock column is part of a lock manager and not part of heatmap 110.

Multiple nodes may concurrently have a same data block read locked. As shown, "R: A, C" means that nodes A and C both have data block 122 read locked. A same data block should not be concurrently write locked and read locked. As shown, data blocks 123-124 are unlocked. In an embodiment, a node notifies other nodes and/or records within heatmap 110 that the node is requesting a read lock or a write lock.

A node that acquires a write lock should eventually and expressly release the lock. A read lock may be expressly or implicitly released or broken as follows. Acquisition of a write lock may be initiated even for a data block that is already read locked by other nodes. When the write lock of a data block is acquired, multiple reactions may occur such as follows.

In an embodiment, all nodes that already acquired read locks of that data block are notified that their read locks are now automatically broken. In an embodiment, a node that needs to resume reading the data block should reacquire the read lock, which is not granted until the write lock is expressly released, at which time a new version of the data block can be read. Thus, different versions of the data block are observed before and after reacquisition of the read lock. In an embodiment and in some cases, a reader node may decide to continue using content from a stale local replica without a lock such as after a read lock is broken. For example, an isolation level of a database session may be configured for repeatable reads.

In an embodiment, a node that has acquired a read lock can upgrade to a write lock, which occurs in a same way as acquiring a write lock without already having a read lock, and which implicitly breaks the read lock. In an embodiment, a node that has acquired a write lock can downgrade to a read lock, which occurs in a same way as unlocking the write lock and then acquiring the read lock.

Fairness in granting locks prevents starvation by a node needing a data block. In an embodiment, locks are granted in a same temporal ordering as requested for a same data block such as by queueing requests. A request to release a lock is never queued. In an embodiment, downgrading a lock occurs without queuing.

### MINIMUM REPLICATION

Techniques herein incorporate two kinds of replication. As discussed later herein, replication on demand entails creating an extra replica of a data block on a node that needs but lacks the data block. If a same data block is eventually, whether simultaneously or not, needed on many or all nodes of a cluster, then an embodiment may eventually replicate that data block to many or all nodes of the cluster. In other words, many or all nodes may simultaneously be replicate nodes for the same data block, which ensures ample replication of that data block.

The other kind of replication is minimum replication to ensure minimal redundancy regardless of demand. For example, a data block may be currently unneeded by all nodes, but the data block should still be persisted on a few nodes to avoid data loss in case of a future need for that data block by any node. Due to demand replication, instead of minimum replication, a data block that is in high demand at many nodes will usually have ample replicas in the cluster.

A technical problem may arise when only one node needs and writes a data block. Locally writing the data block necessarily causes remote replicas to become stale. Due to lack of current demand for that data block by other nodes, demand replication does not occur to propagate the revised data block. This problem of lack of replication is solved by minimum replication, for which other problems arise, including deciding which nodes should be replicate nodes when: a) none or only one node needs the data block in the case of low demand, or b) in the opposite case of high demand, there may be too many stale replicas of the data block to replace all of the stale replicas with the revised data block. Techniques herein solve these problems of replicate node selection for minimum replication by integrating minimum replication into various triggers such as release of a write lock as follows.

When the write lock of a data block is released, additional activity occurs as follows, including enforcement of minimum replication. As explained above: a) a node that acquires a read or write lock also receives and persists a replica if the node lacks a local replica, and b) that may create more than the minimum amount of replicas of a data block. When the write lock of a data block is released, the minimum amount of replicate nodes, including the node that acquired the write lock, are selected to remain replicate nodes. In various embodiments, heatmap 110 or the node that acquired and releases the write lock selects the remaining replicate nodes. In an embodiment, a same synchronous call path (i.e. control flow) includes: write locking, modifying a data block, unlocking, locally persisting, informing heatmap 110, and/or replicating the revision to remaining replicate nodes.

Criteria for selecting remaining replicate nodes may or may not include: network topology such as with a hierarchical network, workload, and/or performance metrics such as unused local disk space. In an embodiment and as discussed later herein, a Bayesian network calculates and compares various probabilities to select remaining replicate nodes by predicting which replicate nodes could maximize throughput and/or optimize other performance metrics.

Reactions by remaining replicate nodes are discussed later herein. As explained above, a data block may have more replicas than needed. Extra replicate nodes that are not selected to be remaining replicate nodes cease to be replicate nodes of the data block when a write lock is released. Even when no write lock is involved, an autonomous component of cluster 100, as discussed earlier herein, may autonomously decide to increase or decrease the minimum and/or current replication of a data block as discussed later herein.

In embodiments discussed later herein, writing a data block may cause invalidation of replicas of the data block at other nodes even before a write lock is released. The dirty column in heatmap 110 indicates such invalidation. As shown, node C has written and marked node 123 as dirty.

However, invalidation may or may not entail immediate breaking of read locks. As discussed later herein, various embodiments may eagerly or lazily invalidate a data block. For example as shown, node B has not yet noticed and/or reacted to node B's replica being invalidated by node C's write.

The consistency model of cluster 100 may provide read-after-write semantics such that stale data is never read. For example even though replicas are distributed and not necessarily centrally managed, cluster 100 may still provide POSIX compliant I/O such as read-after-write. As discussed later herein, a writer node may modify a data block in volatile memory such as with an I/O buffer with deferred flushing that may include persisting and replicating. With locking behaviors discussed herein, and with accesses that identify particular data blocks or ranges of data blocks, multiple reader nodes and multiple writer nodes may concurrently operate on different respective portions of a same POSIX compliant file, even with deferred persisting and replicating and without compromising POSIX consistency.

Horizontally scaled parallel reads may occur. For example, node A may replicate: a) data blocks 123-124 from node B, b) same blocks 123-124 instead from node C, or c) simultaneously data block 123 from node B and data block 124 from node C. In an embodiment, which replicate node provides a data block depends on which node requests the data block such as with a hierarchical network as discussed earlier herein.

### WAYS TO REPLICATE

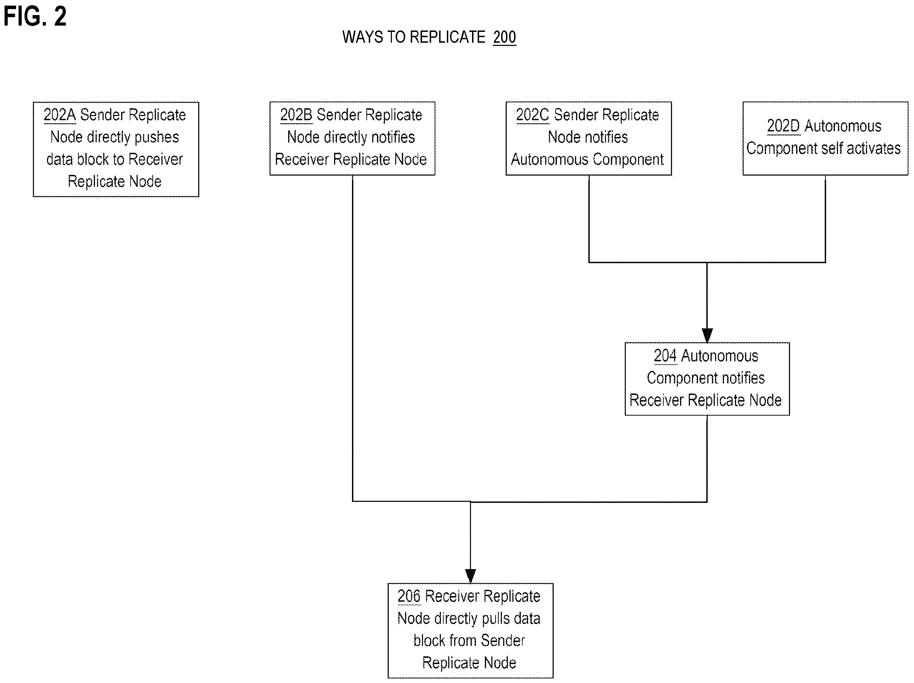

FIG. 2 is a flow diagram that depicts example implementation ways to replicate 200 a data block from one node to another. FIG. 2 introduces replication patterns that may be applicable to figures presented later herein. Various components in FIG. 2 may be implementations of more or less similar components of FIG. 1. FIG. 2 emphasizes transfer interactions without context. Occasions and scenarios for replication are discussed later herein. Various embodiments may have various transport mechanisms as discussed later herein.

Ways to replicate 200 includes various mutually exclusive ways that begin with respective steps 202A-D, some of which share subsequent steps 204 and 206 as shown. For demonstrative purposes, FIG. 2 entails a system that includes: a) a data block and a heatmap, b) a sender replicate node that already has a valid local replica of the data block, c) a receiver replicate node that is becoming a replicate node or is refreshing its stale replica of the data block, and d) an autonomous component of the cluster as explained earlier herein.

Various steps of FIG. 2 are performed by those various components as follows. As explained earlier herein, replication is primarily driven by active nodes, and the heatmap may be a passive data structure in most embodiments. Also as explained earlier herein, replication may sometimes entail initiation and/or participation by an autonomous component of the cluster. As discussed below, steps 202C-D and 204 entail active participation by the autonomous component. As discussed below, step 202D actually entails autonomous activity by the autonomous component.

In step 202A, the sender replicate node directly pushes the data block to the receiver replicate node. For example, the sender replicate node may perform a remote direct memory access (RDMA) write to copy the data block from the sender replicate node's volatile memory into the receiver replicate node's volatile memory. RDMA is discussed later herein. In various embodiments and although not shown, replication may be incomplete until: a) the heatmap is updated with the transfer, and/or b) the receiver replicate node locally persists the data block.

In step 202B, the sender replicate node directly notifies the receiver replicate node of a replication opportunity such as an occurrence that may conditionally or unconditionally need replication. If the receiver replicate node decides to react, then step 206 occurs. In step 206, the receiver replicate node directly pulls the data block from the sender replicate node such as with an RDMA read. RDMA operations are presented in related non-patent literature (NPL) "Designing NFS With RDMA for Security, Performance and Scalability".

In step 202C, the sender replicate node expressly or implicitly notifies the autonomous component of a replication opportunity such as an occurrence that may conditionally or unconditionally need replication. Implicit notification may occur if the autonomous component subscribes, monitors, observes, or otherwise receives or detects an indication of the sender replicate node's activity such as locking, modifying, persisting, or unlocking of the data block. For example in various embodiments, the autonomous component may observe initiation and/or completion of some or all of the shown steps and/or some or all of the shown transitions between steps. The autonomous component conditionally or unconditionally reacts by performing step 204.

In step 204, the autonomous component notifies the receiver replicate node of a replication opportunity such as an occurrence that may conditionally or unconditionally need replication. If the receiver replicate node decides to react, then step 206 occurs as described above.

In step 202D, the autonomous component autonomously activates itself such as upon: a) periodic expiration of an interval timer such as for cooling or resetting access counts, b) some performance metric threshold of a node, a data block, or the whole system, and/or c) as directed according to a probabilistic prediction by a Bayesian network as discussed later herein. The autonomous component may autonomously decide that replication is required or desirable, in which case steps 204 and 206 may occur as described above.

### CREATING AND DISCARDING REPLICAS

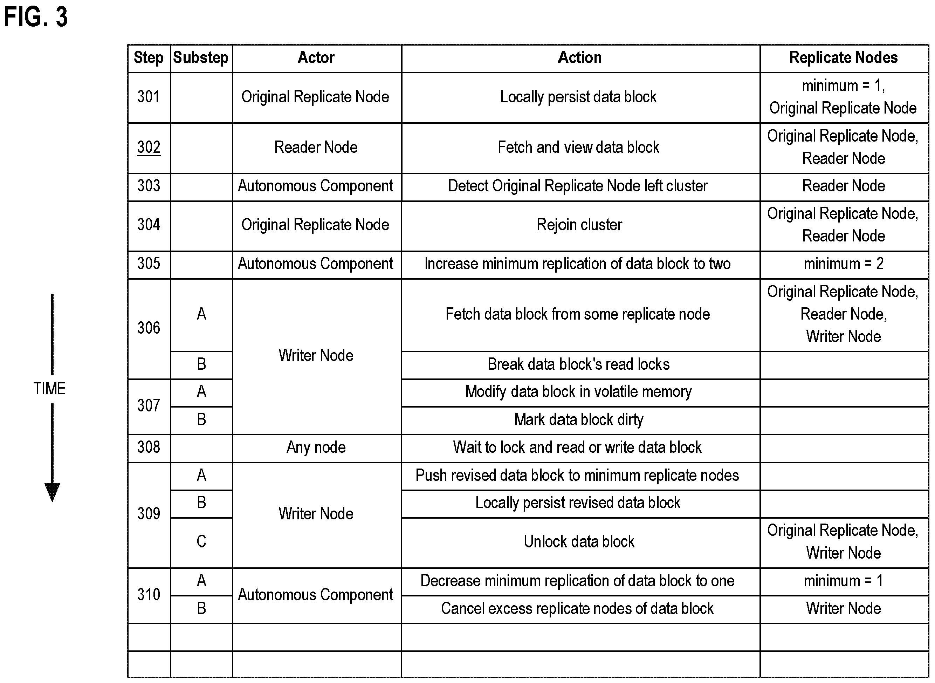

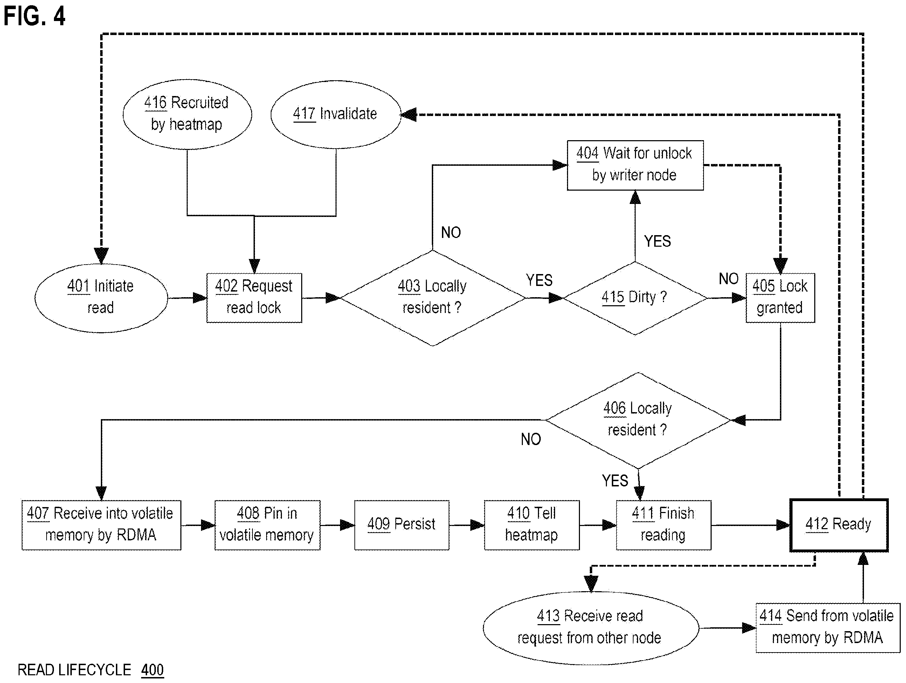

FIG. 3 depicts an example sequence of steps 301-310 that may occur to create and discard replicas of a data block as various scenarios progress and interact. FIG. 3 is a macroscopic view of system behavior. As presented later herein, FIG. 4 is a microscopic view of behavior of a node that can receive and/or read a data block for various reasons such as the reader node below. FIGs. 3-4 may or may not depict a same embodiment.

Steps 301-310 occur in the order shown. However, sub-steps of a given step may be reordered or parallelized within the step under some conditions or embodiments. For example, sub-steps A-B of step 309 may concurrently occur as discussed later herein.

Various components in FIG. 3 may be implementations of more or less similar components of FIG. 1. For demonstrative purposes, FIG. 3 entails a system that includes: a) a data block and a heatmap, b) an original replicate node that already has a valid local replica of the data block, c) a reader node and a writer node that need but lack the data block, and d) an autonomous component of the cluster as explained earlier herein.

Various steps of FIG. 3 are performed by various components as shown in the actor column. Sub-steps of a same step are performed by a same actor. In various embodiments, the autonomous component may observe initiation and/or completion of some or all of the shown steps and/or sub-steps, even if the autonomous component is currently inactive and not otherwise directly involved with the step.

Initially in step 301, the original replicate node locally persists the data block as shown in the action column. As shown in the replicate nodes column, the heatmap is used to enforce a minimum of one replica of the data block, which resides on the original replicate node. In other words, the original replica node has a copy of the data block in volatile memory and on local disk, and no other node contains the data block.

In step 302, the reader node autonomously replicates and reads the data block. Unshown sub-steps of step 302 may include: a) read locking the data block, b) causing the data block to be copied from the original replicate node such as with some way presented in FIG. 2, c) storing the data block in volatile and nonvolatile storage, and/or d) using the content of the data block such as during database query execution by a remote client of the reader node such as for online analytical processing (OLAP). In any case, step 302 causes the reader node to become an extra replicate node, as shown in the replicate nodes column, which the heatmap may track.

Steps 303-304 regard cluster membership of nodes. In an embodiment, the cluster has a static inventory of nodes that fluctuate only during malfunctions or maintenance. In an embodiment, additional nodes can be added to: a) increase cluster storage capacity by providing more unused disk space, b) increase throughput by storing fewer replicas on each of more nodes, and/or c) increase reliability by increasing minimum replicates.

In an embodiment, the cluster has a federation of nodes that can individually and autonomously join and leave the cluster. Example federations include: a) elastic horizontal scaling such as in a computer cloud or data grid, or b) a loose federation of personal computers, workstations, and/or mobile devices such as laptops and smartphones.

In step 303, the original replicate node leaves the cluster, which the autonomous component detects. For example, the original replicate node may expressly leave or implicitly leave by timeout or loss of heartbeat such as when a disk drive crashes. That may cause catastrophic data loss if the node leaving were the only replicate node for the data block, which is why a more practical example would never set the minimum replication below two.

How the autonomous component reacts to a node leaving may vary as follows. If the cluster no longer has the minimum replicas of the data block, a node that was not a replicate node is selected to become another replicate node to persist a replacement of the lost replica. When a node leaving causes multiple data blocks to have insufficient replicas, then one or more new replicate nodes may be needed. Discussed later herein are heuristics for selecting: a) how many additional replicate nodes to recruit, b) which of those additional replicate nodes should receive which data blocks, and c) from which surviving replicate nodes should new replicas be copied from. In one example, one new replicate node receives all of the replacement replicas.

As shown in the replicate nodes column of step 303, the reader node is a sole surviving replicate node for the data block. Because the current minimum of one replicate node is still available, the autonomous component does not need to recruit an additional replicate node.

In step 304, the original replicate node rejoins the cluster. In various embodiments or scenarios upon rejoining, some or all of the original replicate node's local inventory of replicas is lost, stale, or ignored by default. In an embodiment, the cluster does not accept replicas from a rejoining node. In the shown embodiment, the autonomous component or the rejoining node detects that some replicas on the rejoining node are still valid such as when the data block was unmodified in the cluster between leaving and rejoining. In that case and as shown in the replicate nodes column of step 304, the cluster again has more replicas of the data block than needed.

In step 305, the autonomous component autonomously decides to increase the minimum replicas of the data block to two as shown in the replicate nodes column. Because the data block already has two replicas, the autonomous component need not recruit another replicate node. Otherwise, recruitment would occur as discussed above.

Steps 306-309 involve a writer node such as for a database transaction such as for online transaction processing (OLTP). In step 306, the writer node write locks the data block. In sub-step 306A and because the writer node lacks and needs the data block, replication of the data block to the writer node from any other replicate node for that data block occurs such as by some way presented in FIG. 2. Heuristics for selecting which replicate node to copy from are presented later herein and may be decided by the writer node. As shown in the replicate nodes column of step 306, the writer node becomes another replicate node.

In step 306B, write locking the data block causes all read locks on that data block to be broken, for which other nodes may react in various ways and embodiments as discussed later herein. However, the heatmap still tracks which other nodes are replicate nodes, and their replicas are not yet invalid. For example, data is not lost merely because a node were to write lock the data block and then immediately crash.

In step 307, the writer node modifies the data block. Specifically, in sub-step 307A the writer node modifies the data block in volatile memory. Buffering is discussed later herein.

In sub-step 307B, the writer node marks the data block as dirty, which means modified but not locally persisted and/or not replicated. In an embodiment, the heatmap records which data blocks are dirty. As discussed later herein, marking a data block as dirty may eventually cause lazy invalidation such as when a replicate node eventually and autonomously checks to see if the data block has been marked as dirty.

In step 308 and while the data block is write locked, any other node may attempt to acquire a read lock or a write lock of the data block. The attempt is stalled until the current write lock is released, and the attempting node waits for the requested lock to be granted.

In step 309 the writer node commits and flushes the revised data block by unlocking it. In sub-step 309A, the writer node selects a minimum amount of replicate nodes, including the writer node, to remain as replicate nodes. The writer node's revised replica is copied to the remaining replicate nodes, which in this case are the writer node and the original replicate node as shown in the replicate nodes column of sub-step 309C. An embodiment may select the most recent writer node, no other recent writer nodes, and recent reader nodes as remaining replicate nodes.

Such replication may occur by some way presented in FIG. 2. Replicate nodes in excess of minimum replication cease to be replicate nodes for the data block such as the reader node as shown. Also caused by unlocking is sub-step 309B in which the writer node locally persists the revised data block. In sub-step309C unlocking is complete, and a same or different node may immediately or eventually lock the data block for a different use.

Step 310 entails autonomous behavior by the autonomous component. In sub-step 310A, the autonomous component autonomously reduces the minimum replication of the data block such as after quiescence of a demand spike for the data block and/or during a demand spike of a different data block. In sub-step 310B, the autonomous component autonomously cancels excess replicate nodes of a data block. However, canceling excess replicate nodes may be optional and not occur in some cases.

Because the writer node had most recently write locked the data block, the writer node remains a replicate node. In this case, the original replicate node ceases to be a replicate node for the data block. In another example, the autonomous component may autonomously cancel excess replicate nodes even when the minimum replication amount is unchanged, the data block is never write locked, and cluster membership is unchanged. For example, dynamic fluctuations of demand for data or local or system performance metrics may cause autonomous intervention by the autonomous component that may create or discard replicas of same or different data blocks.

### READ LIFECYCLE

FIG. 4 depicts an example read lifecycle 400 for a reader node and a data block. In various embodiments, initiation and/or completion of some or all of the shown steps and/or some or all of the shown transitions between steps may be observed by an autonomous component and/or recorded in a heatmap. The shown steps are performed by a reader node during various scenarios that involve a same data block in various ways.

When adjacent steps occur more or less in rapid sequence or concurrently, the transition is shown as a solid arrow. If an external or asynchronous stimulus is needed to cause a transition after an indefinitely long duration, then the transition is shown as a dashed arrow.

In a scenario that performs steps 401-412 in that order, the reader node lacks and needs to read the data block. In step 401, the reader node decides to read the data block such as when a remote client of the reader node uses the reader node for data retrieval during query execution. Step 402 requests the read lock for the data block as discussed earlier herein.

Part of requesting the read lock may entail additional activities such as steps 403-404 and 415 that may occur before the read lock is granted. Steps 403 and 415 are shown as decision diamonds because behavior involved with requesting the read lock may be conditioned on locality of the data block and/or dirtiness of the data block. Step 403 detects whether or not the data block already resides on the reader node.

In other words, step 403 detects whether or not the reader node is already a replicate node for the data block, in which case the read might be locally satisfied. If the data block is not locally available, step 404 potentially waits for the data block to be unlocked by a writer node. If the data block is already unlocked, waiting is unneeded, and step 404 immediately completes.

If step 403 instead detects the data block is already locally available, then step 415 detects whether or not the data block was marked as dirty by a writer node. For example when requesting the read lock, the reader node may inspect a global catalog of data blocks and/or ranges of data blocks that are currently marked as dirty.

If the writer node has already unlocked the data block and persisted and replicated the revision of the data block, then the data block is not write locked and not listed as dirty. Thus, a read lock for a local data block that is not dirty or write locked will be immediately granted in step 405. Thus, step 415 is immediately followed by step 405 when the data block is not dirty.

Whereas if the data block is locally available but remotely dirty by a writer node, then the writer node has not yet released the write lock. In that case, step 415 is followed by step 404 to await release of the write lock as explained above. In an embodiment, the transition from step 415 to 404 includes the reader node notifying and causing the writer node to flush its buffered and dirty data block including replication and local persistence by the writer node. However, such remote flushing need not include releasing the write lock.

As shown, waiting for release of a write lock in step 404 may occur whether the data block is local or not. Thus, waiting by step 404 may be preceded by step 403 or 415. Eventually the write lock is released, and the read lock is granted in step 405. After acquiring the read lock, subsequent behavior of the reader node depends on step 406 that detects whether or not the data block is already locally available.

The detected results of steps 403 and 406 should be the same. If the data block is locally available, then direct use of the data block may occur in step 411. For example, the reader node may inspect and analyze the content of the data block. Otherwise, the data block is only remotely available and should be immediately replicated to the reader node, which entails steps 407-410 as follows.

Step 407 uses an RDMA read, as discussed earlier herein for FIG. 2, to receive a copy of the data block into the reader node's volatile memory from another node. Some embodiments may or may not have step 408 that locally keeps the data block at a particular location in volatile memory. For example eventually, another node may use an RDMA read to fetch the data block from that particular address in volatile memory.

In an embodiment, step 407 uses a buffer such as an operating system (OS) input/output (I/O) buffer that remains at the particular address in memory. In an embodiment, step 407 uses a buffer in a buffer cache such as managed by a database management system (DBMS) for database blocks. RDMA buffering and addressing is presented in related non-patent literature (NPL) "Designing NFS With RDMA for Security, Performance and Scalability".

Volatile storage by step 407 may be insufficient for replication herein, and additional step 409 that locally persists the received data block may also be necessary. For example if the data block is part of an original file, then depending on the embodiment and scenario, the data block may be locally persisted: a) into a corresponding block position within a whole or partial local copy of the original file, b) as a one-block file by itself, or d) into another file of unordered data blocks that are cataloged for random access. For example, various data blocks may be initially persisted without regard for ordering within the original file and later reassembled as a contiguous part or all of the original file.

In step 410, the reader node expressly records in, the heatmap, the replication after locally persisting the data block. By persisting a local replica in step 410, the reader node has become a replicate node for the data block, and the reader node can directly use content of the local replica in step 411. Thus, step 411 may occur regardless of whether replication was needed or the data block was already locally available. A precondition of step 411 may be that the data block resides in volatile and nonvolatile local storage.

After step 411, reading and using the data block by the reader node may be complete, but the reader node still remains a replicate node of data block in step 412. In various embodiments, the reader node does or does not release its read lock on the data block when finished using the data block. Because the reader node remains a replicate node of the data block, step 413 may receive a read request from another node that also becomes a replicate node when step 414 sends a copy of the data block such as by RDMA to and from volatile memories, after which the ready state of step 412 is revisited. Thus, the reader node may retain and provide replicas of the data block while in the ready state more or less indefinitely.

While in the ready state of step 412 and although not shown, an autonomous component or a writer node may cancel the reader node as a replicate node for the data block. In that case, the reader node may discard the data block from volatile and nonvolatile memory.

While in the ready state of step 412, the reader node may detect or be informed that the local copy of the data block is stale because a writer node marked the data block as dirty or committed a revision of the data block. In that case and in various embodiments, invalidation step 417 occurs that may discard the data block from volatile and nonvolatile memory and, in some cases, causes the data block to be again replicated to the reader node.

Even when in the ready state of step 412, any attempt by the reader node to later use the data block should begin again at step 401, including relocking. The local copy of the data block can be locally reused without needing replication when steps 401-403, 415, 405-406, and 411 are repeated in that order. Otherwise, repeating replication as described above is needed.

As discussed earlier herein, an autonomous component may act proactively and autonomously to cause replication not requested by a node. For example, a replicate node may crash or the autonomous component may autonomously raise the minimum amount of replicas of the data block. In such cases, the autonomous component may autonomously recruit a node to become a replicate node. For example if the reader node is not already a replicate node for the data block, then the autonomous component may cause the reader node to become a replicate node in step 416, with replication occurring as described above.

### EXAMPLE AUTONOMY AND/OR HEATMAP USE FOR REPLICATION

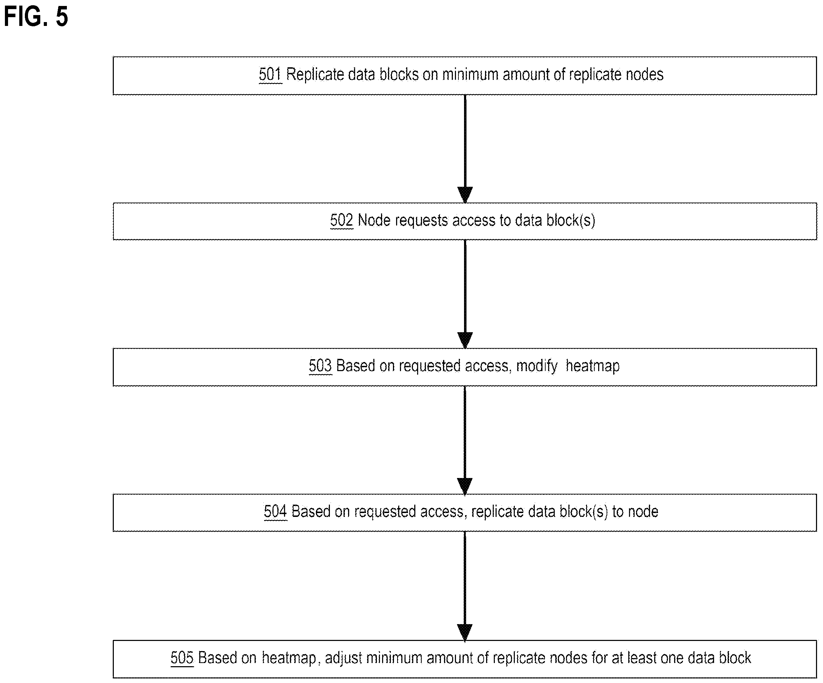

FIG. 5 depicts an example computer process in which replication and a heatmap may affect each other. An involved system may include a data block, a heatmap, an autonomous component, and nodes, including a requesting node.

Although step 501 is preparatory and entails persisting replicas of data blocks on various nodes, step 501 may expressly occur as an initial distributing and storing of persistent data or by operation of earlier replications as discussed earlier herein. For example, various files may contain various data blocks, and whole or partial replicas of the files may be distributed and stored in local disks of various nodes.

In step 502, the requesting node request read or write access to various data block(s) such as a range of data blocks. Step 502 may entail acquiring read locks or write locks on the involved data blocks as discussed earlier herein.

Based on the requested access, the heatmap is modified in step 503. For example, a read counter or a write counter may be respectively associated with each data block or range of data blocks being accessed. The heatmap is informed of the access according to techniques presented earlier herein. For example, requesting or granting a lock may cause incrementing the heat map.

Based on the requested access, step 504 replicates some or all of the accessed data blocks and possibly other data blocks. For example, sequential access of many contiguous data blocks of a same file may: a) reuse local replicas of some data blocks, b) cause replication of other data blocks needed for the same access request, and/or c) proactively (i.e. eagerly and autonomously) replicate unrequested data blocks of the same file that are likely to be needed soon. For example, step 504 may read ahead to prefetch some data blocks such as for a table scan.

Based on the heatmap, a minimum amount of replicate nodes is adjusted in step 505 for at least one data block, range of data blocks, or file. As discussed earlier herein, increasing or decreasing the minimum amount of replicas may occur in response to an autonomous and proactive decision by an autonomous component. The autonomous component may increase and then decrease the minimum amount for a data block respectively at the start and finish of a demand spike for the data block. As discussed below, the autonomous component may delegate some decisions to a Bayesian network that predicts optimal configurations and adjustments based on probabilities that respective recognizable patterns are occurring as learned from historical accesses of data blocks and nodes such as observed and/or recorded in the heatmap.

### REPLICATION PATTERNS

Various embodiments of logic for automatic replica optimization may impose various replication patterns on an entire cluster or respective subsets of nodes, data blocks, and/or files such as the following replication patterns:
A. Full N-way - this type of replication replicates the data among N number of nodes, waiting for all writes to complete before returning to the originating client. This is the slowest type of modification.
B. Fail over groups - like N-way, but nodes are organized into groups of nodes, and data and revisions must be replicated to at least one node in each group. This helps to define regions of data redundancy, perhaps across racks or other characteristics, as desired by the user.
C. Single - no replication.
D. Asynchronous - data and revisions are replicated across nodes without waiting for other nodes to acknowledge the request. This is the fastest way to replicate, but does not provide a perfect guarantee that data is actually replicated.
E. Local Mirror + N Remote - a local disk or filesystem can be configured to be a local copy. This provides redundancy against disk, but not node failures. The node failure can be guarded against using a second remote node (or N remote nodes), which ensures that data survives the loss of the primary node.
F. Local Mirror + N Remote Async - a local disk or filesystem can be configured to be a local copy - this provides redundancy against disk, but not node failures. The node failure can be guarded against using a second remote node (or N remote nodes), which ensures that data persists with the loss of the primary node. The remote copy is async, to provide for fast local redundancy.
G. Machine learning and/or continuous tuning - using a tracking mechanism, filesystem access patterns can be learned and recognized. The heatmap can be consulted for distributing data across the cluster in ways that do or do not fit the other rigid replication patterns. In combination with at least one of the other replication patterns, data can be placed in regions where it is accessed frequently, ensuring lower latencies for future access.

Thus, an autonomous component can impose and switch between replication patterns. A same or different autonomous component can further adapt and tune a replication configuration, autonomously and on an ongoing basis, after a replication pattern was imposed.

### NETWORK TRANSPORT

Various embodiments may use various network transports to facilitate replication such as RDMA. In an embodiment, transfer with or without RDMA may entail using network transport that is connectionless or unacknowledged such as user datagram protocol (UDP) for increased throughput. For example, Infiniband has various transport modes that support and/or accelerate UDP transmission. UDP also invites application-specific sequencing and retransmission of packets such as when a lost packet may conditionally need resending.

Although a storage cluster of nodes is logically fully connected at the transport layer that is one layer of a stack of layers in the open systems interconnection (OSI) network communication model, at the network layer beneath the transport layer, a network topology of the cluster may entail asymmetry such as differing communication link bandwidths such as with an internetwork or with store-and-forward multi-hop distance and differing link utilizations that may cause a bottleneck. Communication fabric may contain a hierarchy of network switches. Factors and concerns similar to those of network routing may be included in decisions by automatic replica optimization logic. Such decisions may integrate static metrics and facts such as from an Infiniband topology and dynamic metrics and facts such as relative utilizations of links and/or nodes and node membership in a loosely federated cluster.

Transmissions may be encrypted such as over an untrusted internetwork. A network session begins when a node joins the cluster and ends when the node leaves the cluster, regardless of whether transport has a connection or is connectionless. A network session may entail selecting particular data blocks for transmission such as database blocks.

For example, only non-contiguous data blocks may be sent for random access. A sequence of more data blocks than requested may be sent such as when: a) table scanning, or b) sending all or part of a file such as when a filesystem is used for persistence.

Various embodiments may use various communication link technologies that are optimized for low latency transmission such as Fibre Channel (FC), Internet Small Computer System Interface (iSCSI), and Fibre Channel over Ethernet (FCoE). Various embodiments may use various RDMA protocols to avoid mechanical drive latencies such as from disk rotation or track switching. For example, RDMA may deliver a replica into volatile memory of a reader node, and then the following may concurrently occur: a) the reader node uses the volatile content for application specific purposes, and b) the content is locally persisted. RDMA protocols include RDMA over Converged Ethernet (RoCE) and iWARP.

### BAYESIAN NETWORK

To some extent, a cluster of nodes may operate as a distributed cache whose latency, throughput, energy consumption, and disk drive lifespan may depend on data block distribution patterns. For example, OLTP latency may depend on temporal and spatial locality of replicas. Sequential access of many data blocks such as during a table scan such as by OLAP may disrupt placement of needed replicas. Selection of replicate nodes after writing may jeopardize existing placement of replicas.

Automatic replica optimization logic may include or be directed by a Bayesian network that predicts various optimal replica distributions based on past access and learned probabilities of future access. Various Bayesian networks may calculate a probability of a respective occurrence such as a likelihood that:
- two data blocks will be accessed together,
- one data block will be accessed because another data block has been accessed,
- a particular node will access a particular data block, or
- a lock will be released in a duration.
For example, a Bayesian network may learn that some nodes or applications: hold locks longer than other nodes or applications, or have a working set of data blocks that is more or less stable.

### HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

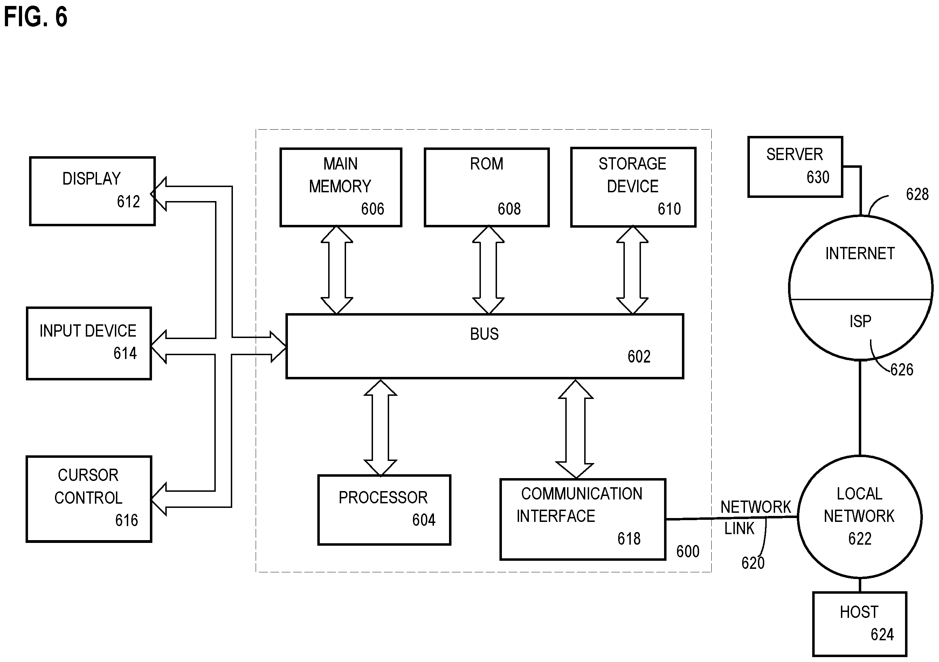

For example, FIG. 6 is a block diagram that illustrates a computer system 600 upon which an embodiment of the invention may be implemented. Computer system 600 includes a bus 602 or other communication mechanism for communicating information, and a hardware processor 604 coupled with bus 602 for processing information. Hardware processor 604 may be, for example, a general purpose microprocessor.

Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Such instructions, when stored in non-transitory storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk, optical disk, or solid-state drive is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques herein are performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical disks, magnetic disks, or solid-state drives, such as storage device 610. Volatile media includes dynamic memory, such as main memory 606. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid-state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the world wide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

### SOFTWARE OVERVIEW

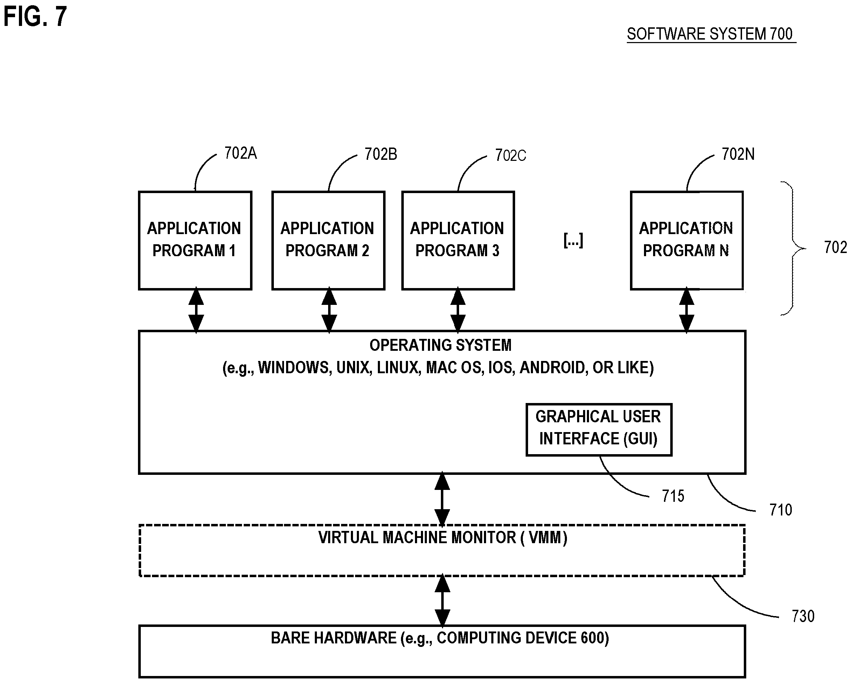

FIG. 7 is a block diagram of a basic software system 700 that may be employed for controlling the operation of computing system 600. Software system 700 and its components, including their connections, relationships, and functions, is meant to be exemplary only, and not meant to limit implementations of the example embodiment(s). Other software systems suitable for implementing the example embodiment(s) may have different components, including components with different connections, relationships, and functions.

Software system 700 is provided for directing the operation of computing system 600. Software system 700, which may be stored in system memory (RAM) 606 and on fixed storage (e.g., hard disk or flash memory) 610, includes a kernel or operating system (OS) 710.

The OS 710 manages low-level aspects of computer operation, including managing execution of processes, memory allocation, file input and output (I/O), and device I/O. One or more application programs, represented as 702A, 702B, 702C ... 702N, may be "loaded" (e.g., transferred from fixed storage 610 into memory 606) for execution by the system 700. The applications or other software intended for use on computer system 600 may also be stored as a set of downloadable computer-executable instructions, for example, for downloading and installation from an Internet location (e.g., a Web server, an app store, or other online service).

Software system 700 includes a graphical user interface (GUI) 715, for receiving user commands and data in a graphical (e.g., "point-and-click" or "touch gesture") fashion. These inputs, in turn, may be acted upon by the system 700 in accordance with instructions from operating system 710 and/or application(s) 702. The GUI 715 also serves to display the results of operation from the OS 710 and application(s) 702, whereupon the user may supply additional inputs or terminate the session (e.g., log off).

OS 710 can execute directly on the bare hardware 720 (e.g., processor(s) 604) of computer system 600. Alternatively, a hypervisor or virtual machine monitor (VMM) 730 may be interposed between the bare hardware 720 and the OS 710. In this configuration, VMM 730 acts as a software "cushion" or virtualization layer between the OS 710 and the bare hardware 720 of the computer system 600.

VMM 730 instantiates and runs one or more virtual machine instances ("guest machines"). Each guest machine comprises a "guest" operating system, such as OS 710, and one or more applications, such as application(s) 702, designed to execute on the guest operating system. The VMM 730 presents the guest operating systems with a virtual operating platform and manages the execution of the guest operating systems.

In some instances, the VMM 730 may allow a guest operating system to run as if it is running on the bare hardware 720 of computer system 700 directly. In these instances, the same version of the guest operating system configured to execute on the bare hardware 720 directly may also execute on VMM 730 without modification or reconfiguration. In other words, VMM 730 may provide full hardware and CPU virtualization to a guest operating system in some instances.

In other instances, a guest operating system may be specially designed or configured to execute on VMM 730 for efficiency. In these instances, the guest operating system is "aware" that it executes on a virtual machine monitor. In other words, VMM 730 may provide para-virtualization to a guest operating system in some instances.

A computer system process comprises an allotment of hardware processor time, and an allotment of memory (physical and/or virtual), the allotment of memory being for storing instructions executed by the hardware processor, for storing data generated by the hardware processor executing the instructions, and/or for storing the hardware processor state (e.g. content of registers) between allotments of the hardware processor time when the computer system process is not running. Computer system processes run under the control of an operating system, and may run under the control of other programs being executed on the computer system.

### CLOUD COMPUTING

The term "cloud computing" is generally used herein to describe a computing model which enables on-demand access to a shared pool of computing resources, such as computer networks, servers, software applications, and services, and which allows for rapid provisioning and release of resources with minimal management effort or service provider interaction.

A cloud computing environment (sometimes referred to as a cloud environment, or a cloud) can be implemented in a variety of different ways to best suit different requirements. For example, in a public cloud environment, the underlying computing infrastructure is owned by an organization that makes its cloud services available to other organizations or to the general public. In contrast, a private cloud environment is generally intended solely for use by, or within, a single organization. A community cloud is intended to be shared by several organizations within a community; while a hybrid cloud comprise two or more types of cloud (e.g., private, community, or public) that are bound together by data and application portability.

Generally, a cloud computing model enables some of those responsibilities which previously may have been provided by an organization's own information technology department, to instead be delivered as service layers within a cloud environment, for use by consumers (either within or external to the organization, according to the cloud's public/private nature). Depending on the particular implementation, the precise definition of components or features provided by or within each cloud service layer can vary, but common examples include: **Software as a Service** (*SaaS*), in which consumers use software applications that are running upon a cloud infrastructure, while a *SaaS* provider manages or controls the underlying cloud infrastructure and applications. **Platform as a Service** (PaaS), in which consumers can use software programming languages and development tools supported by a PaaS provider to develop, deploy, and otherwise control their own applications, while the PaaS provider manages or controls other aspects of the cloud environment (i.e., everything below the run-time execution environment). **Infrastructure as a Service** (IaaS), in which consumers can deploy and run arbitrary software applications, and/or provision processing, storage, networks, and other fundamental computing resources, while an IaaS provider manages or controls the underlying physical cloud infrastructure (i.e., everything below the operating system layer). **Database as a Service** (*DBaaS*) in which consumers use a database server or Database Management System that is running upon a cloud infrastructure, while a *DbaaS* provider manages or controls the underlying cloud infrastructure and applications.

The above-described basic computer hardware and software and cloud computing environment presented for purpose of illustrating the basic underlying computer components that may be employed for implementing the example embodiment(s). The example embodiment(s), however, are not necessarily limited to any particular computing environment or computing device configuration. Instead, the example embodiment(s) may be implemented in any type of system architecture or processing environment that one skilled in the art, in light of this disclosure, would understand as capable of supporting the features and functions of the example embodiment(s) presented herein.

In the foregoing specification, embodiments of the invention have been described with reference to numerous specific details that may vary from implementation to implementation. The specification and drawings are, accordingly, to be regarded in an illustrative rather than a restrictive sense.

## Claims

1. A method comprising:
replicating each data block of a plurality of data blocks (121-124) on at least a minimum number of respective one or more replicate nodes of a plurality of nodes (A-C);
requesting, by a first node of the plurality of nodes (A-C), write access to one or more data blocks of the plurality of data blocks (121-124), comprising acquiring, for the one or more data blocks, a write lock that provides exclusive access to the one or more data blocks by the first node;
based on said requesting said write access:
modifying a heatmap (110), and
replicating the one or more data blocks to the first node, thus creating more than the minimum number of replicate nodes for the one or more data blocks;
releasing, for the one or more data blocks, the write lock, comprising selecting a subset of the plurality of nodes (A-C) to remain replicate nodes for the one or more data blocks, wherein said subset includes the first node and has the minimum number of replicate nodes for the one or more data blocks;
adjusting, based on the heatmap (110), the minimum number of respective one or more replicate nodes for at least one data block of the one or more data blocks.

2. The method of Claim 1, wherein the minimum number of replicate nodes is two.

3. The method of Claim 1 or Claim 2, wherein said adjusting, based on the heatmap (110), the minimum number of replicate nodes for the at least one data block comprises reducing the minimum number of replicate nodes for the at least one data block.

4. The method of Claim 3, wherein, after said reducing the minimum number of replicate nodes for the at least one data block, the first node remains a replicate node.

5. The method of any of Claims 1-4, wherein said adjusting, based on the heatmap (110), the minimum number of replicate nodes for the at least one data block occurs in response to said releasing, for the one or more data blocks, the write lock.

6. The method of any of Claims 1-5, wherein, when releasing the write lock, at least one node ceases to be a replicate node for the one or more data blocks.

7. The method of any of Claims 1-6, wherein said subset includes the first node but not any other nodes which have recently written to the one or more data blocks, and wherein said subset includes, in addition to the first node, one or more nodes which have recently read from the one or more data blocks.

8. The method of any of Claims 1-6, further comprising:
granting, for the one or more data blocks, a read lock that prevents the plurality of nodes (A-C) from modifying at least one data block of the one or more data blocks;
granting, for the at least one data block of the one or more data blocks, a second write lock that provides exclusive access to at least one data block by a second node;
wherein said granting the read lock occurs prior to said granting the second write lock;
wherein said acquiring the write lock occurs after releasing the second write lock; and
wherein said subset includes the first node and excludes the second node.

9. The method of Claim 1, wherein said modifying the heatmap (110) is based on a type of said access.

10. The method of Claim 1 or Claim 9, wherein said modifying the heatmap (110) comprises hashing.

11. The method of Claim 1 further comprising recording, in response to said requesting said write access, identifiers of: the first node, and at least one data block of the one or more data blocks.

12. The method of Claim 1, wherein said adjusting the minimum number of respective one or more replicate nodes for the at least one data block comprises, for the at least one data block of the one or more data blocks:
reducing said minimum number of respective one or more replicate nodes based on an amount of write access requests, and/or
increasing said minimum number of respective one or more replicate nodes based on an amount of read access requests.

13. The method of Claim 1 or Claim 12, wherein said adjusting the minimum number of respective one or more replicate nodes for the at least one data block comprises, for the at least one data block of the one or more data blocks, asynchrony.

14. The method of Claim 1 or Claim 12 or Claim 13, wherein said adjusting the minimum number of respective one or more replicate nodes for the at least one data block comprises, for the at least one data block of the one or more data blocks, predicting by a Bayesian network a probability that:
two data blocks will be accessed together,
one data block will be accessed because another data block has been accessed,
the first node will access a particular data block, and/or
a lock will be released in a duration.

15. One or more non-transitory computer-readable storage media storing instructions that, when executed by one or more processors (604), cause the one or more processors to carry out the method of any one of Claims 1-14.

## Patentansprüche

1. Verfahren, das umfasst:
Replizieren jedes Datenblocks einer Mehrzahl von Datenblöcken (121-124) auf mindestens einer Mindestanzahl von jeweils einem oder mehreren Replizierungsknoten einer Mehrzahl von Knoten (A-C),
Anfordern, durch einen ersten Knoten der Mehrzahl von Knoten (A-C), von Schreibzugriff auf einen Datenblock oder mehrere Datenblöcke der Mehrzahl von Datenblöcken (121-124), einschließlich Erlangen einer Schreibsperre für den einen Datenblock oder die mehreren Datenblöcke, die einen exklusiven Zugriff auf den einen Datenblock oder die mehreren Datenblöcke durch den ersten Knoten bereitstellt;
beruhend auf dem Anfordern des Schreibzugriffs:
Modifizieren einer Heatmap (110), und
Replizieren des einen Datenblocks oder der mehreren Datenblöcke an den ersten Knoten, wodurch mehr als die Mindestanzahl von Replizierungsknoten für den einen Datenblock oder die mehreren Datenblöcke erzeugt werden;
Freigeben der Schreibsperre für den einen Datenblock oder die mehreren Datenblöcke, einschließlich Auswählen einer Teilmenge der Mehrzahl von Knoten (A-C), die Replizierungsknoten für den einen Datenblock oder die mehreren Datenblöcke bleiben sollen, wobei die Teilmenge den ersten Knoten enthält und die Teilmenge die Mindestanzahl von Replizierungsknoten für den einen Datenblock oder die mehreren Datenblöcke aufweist;
Anpassen, und zwar beruhend auf der Heatmap (110), der Mindestanzahl von jeweils einem oder mehreren Replizierungsknoten für mindestens einen Datenblock des einen Datenblocks oder der mehreren Datenblöcke.

2. Verfahren nach Anspruch 1, wobei die Mindestanzahl von Replizierungsknoten zwei beträgt.

3. Verfahren nach Anspruch 1 oder Anspruch 2, wobei das auf der Heatmap (110) beruhende Anpassen der Mindestanzahl von Replizierungsknoten für den mindestens einen Datenblock umfasst, dass die Mindestanzahl von Replizierungsknoten für den mindestens einen Datenblock reduziert wird.

4. Verfahren nach Anspruch 3, wobei nach dem Reduzieren der Mindestanzahl von Replizierungsknoten für den mindestens einen Datenblock der erste Knoten ein Replizierungsknoten bleibt.

5. Verfahren nach einem der Ansprüche 1-4, wobei das auf der Heatmap (110) beruhende Anpassen der Mindestanzahl von Replizierungsknoten für den mindestens einen Datenblock ansprechend auf das Freigeben der Schreibsperre für den einen Datenblock oder die mehreren Datenblöcke erfolgt.

6. Verfahren nach einem der Ansprüche 1-5, wobei, wenn die Schreibsperre freigegeben wird, mindestens ein Knoten aufhört, ein Replizierungsknoten für den einen Datenblock oder die mehreren Datenblöcke zu sein.

7. Verfahren nach einem der Ansprüche 1-6, wobei die Teilmenge den ersten Knoten enthält, aber keine anderen Knoten, die kürzlich in den einen Datenblock oder die mehreren Datenblöcke geschrieben haben, und wobei die Teilmenge zusätzlich zu dem ersten Knoten einen oder mehrere Knoten enthält, die kürzlich aus dem einen Datenblock oder den mehreren Datenblöcken gelesen haben.

8. Verfahren nach einem der Ansprüche 1-6, ferner umfassend:
Gewähren einer Lesesperre für den einen Datenblock oder die mehreren Datenblöcke, die die Mehrzahl von Knoten (A-C) daran hindert, mindestens einen Datenblock des einen Datenblocks oder der mehreren Datenblöcke zu modifizieren;
Gewähren einer zweiten Schreibsperre für den mindestens einen Datenblock des einen Datenblocks oder der mehreren Datenblöcke, die exklusiven Zugriff auf mindestens einen Datenblock durch einen zweiten Knoten bereitstellt;
wobei das Gewähren der Lesesperre vor dem Gewähren der zweiten Schreibsperre erfolgt;
wobei das Erlangen der Schreibsperre nach dem Freigeben der zweiten Schreibsperre erfolgt; und
wobei die Teilmenge den ersten Knoten umfasst und den zweiten Knoten nicht umfasst.

9. Verfahren nach Anspruch 1, wobei das Modifizieren der Heatmap (110) auf einem Typ des Zugriffs beruht.

10. Verfahren nach Anspruch 1 oder Anspruch 9, wobei das Modifizieren der Heatmap (110) einen Hash-Vorgang umfasst.

11. Verfahren nach Anspruch 1, ferner umfassend, dass Kennungen des ersten Knotens und mindestens eines Datenblocks des einen Datenblocks oder der mehreren Datenblöcke aufgezeichnet werden, und zwar ansprechend auf das Anfordern des Schreibzugriffs.

12. Verfahren nach Anspruch 1, wobei das Anpassen der Mindestanzahl von jeweils einem oder mehreren Replizierungsknoten für den mindestens einen Datenblock umfasst, und zwar für den mindestens einen Datenblock des einen Datenblocks oder der mehreren Datenblöcke:
Reduzieren der Mindestanzahl von jeweils einem oder mehreren Replizierungsknoten beruhend auf einer Anzahl von Schreibzugriffsanforderungen, und/oder
Erhöhen der Mindestanzahl von jeweils einem oder mehreren Replizierungsknoten beruhend auf einer Anzahl von Lesezugriffsanforderungen.

13. Verfahren nach Anspruch 1 oder Anspruch 12, wobei das Anpassen der Mindestanzahl von jeweils einem oder mehreren Replizierungsknoten für den mindestens einen Datenblock eine Asynchronität für den mindestens einen Datenblock des einen Datenblocks oder der mehreren Datenblöcke umfasst.

14. Verfahren nach Anspruch 1 oder Anspruch 12 oder Anspruch 13, wobei das Anpassen der Mindestanzahl von jeweils einem oder mehreren Replizierungsknoten für den mindestens einen Datenblock umfasst, dass für den mindestens einen Datenblock des einen Datenblocks oder der mehreren Datenblöcke durch ein Bayes'sches Netz eine Wahrscheinlichkeit vorhergesagt wird, dass:
auf zwei Datenblöcke zusammen zugegriffen wird,
auf einen Datenblock zugegriffen wird, weil auf einen anderen Datenblock zugegriffen worden ist,
der erste Knoten auf einen bestimmten Datenblock zugreift, und/oder
eine Sperre während einer Zeitdauer freigegeben wird.

15. Ein nicht-flüchtiges computerlesbares Speichermedium oder mehrere nicht-flüchtige computerlesbare Speichermedien, das/die Anweisungen speichert/speichern, die, wenn sie von einem Prozessor (604) oder mehreren Prozessoren (604) ausgeführt werden, den einen Prozessor oder die mehreren Prozessoren veranlassen, das Verfahren nach einem der Ansprüche 1-14 auszuführen.

## Revendications

1. Procédé comprenant :
dupliquer chaque bloc de données d'une pluralité de blocs de données (121-124) sur au moins un nombre minimal d'un ou plusieurs noeuds de duplication respectifs d'une pluralité de noeuds (A-C) ;
demander, par un premier noeud de la pluralité de noeuds (A-C), un accès en écriture à un ou plusieurs blocs de données de la pluralité de blocs de données (121-124), comprenant l'acquisition, pour le ou les blocs de données, d'un verrou d'écriture qui fournit un accès exclusif au bloc de données ou aux blocs de données par le premier noeud ;
sur la base de ladite demande dudit accès en écriture :
modifier une carte thermique (110), et
dupliquer le ou les blocs de données sur le premier noeud, créant ainsi plus que le nombre minimal de noeuds de duplication pour le ou les blocs de données ;
libérer, pour le ou les blocs de données, le verrou d'écriture, comprenant la sélection d'un sous-ensemble de la pluralité de noeuds (A-C) pour rester des noeuds de duplication pour le ou les blocs de données, ledit sous-ensemble comprenant le premier noeud et ayant le nombre minimal de noeuds de duplication pour le ou les blocs de données ;
ajuster, sur la base de la carte thermique (110), le nombre minimal d'un ou plusieurs noeuds de duplication respectifs pour au moins un bloc de données parmi le ou les blocs de données.

2. Procédé selon la revendication 1, dans lequel le nombre minimal de noeuds de duplication est de deux.

3. Procédé selon la revendication 1 ou la revendication 2, dans lequel ledit ajustement, sur la base de la carte thermique (110), du nombre minimal de noeuds de duplication pour l'au moins un bloc de données comprend la réduction du nombre minimal de noeuds de duplication pour l'au moins un bloc de données.

4. Procédé selon la revendication 3, dans lequel, après ladite réduction du nombre minimal de noeuds de duplication pour l'au moins un bloc de données, le premier noeud reste un noeud de duplication.

5. Procédé selon l'une quelconque des revendications 1 à 4, dans lequel ledit ajustement, sur la base de la carte thermique (110), du nombre minimal de noeuds de duplication pour l'au moins un bloc de données se produit en réponse à ladite libération, pour le ou les blocs de données, du verrou d'écriture.

6. Procédé selon l'une quelconque des revendications 1 à 5, dans lequel, lors de la libération du verrou d'écriture, au moins un noeud cesse d'être un noeud de duplication pour le ou les blocs de données.

7. Procédé selon l'une quelconque des revendications 1 à 6, dans lequel ledit sous-ensemble comprend le premier noeud mais pas les quelconques autres noeuds qui ont récemment écrit sur le ou les blocs de données, et dans lequel ledit sous-ensemble comprend, en plus du premier noeud, un ou plusieurs noeuds qui ont récemment lu à partir du ou des blocs de données.

8. Procédé selon l'une quelconque des revendications 1 à 6, comprenant en outre :
octroyer, pour le ou les blocs de données, un verrou de lecture qui empêche la pluralité de noeuds (A-C) de modifier au moins un bloc de données parmi le ou les blocs de données ;
octroyer, pour l'au moins un bloc de données parmi le ou les blocs de données, un second verrou d'écriture qui fournit un accès exclusif à au moins un bloc de données par un second noeud ;
dans lequel ledit octroi du verrou de lecture intervient avant ledit octroi du second verrou d'écriture ;
dans lequel ladite acquisition du verrou d'écriture intervient après la libération du second verrou d'écriture ; et
dans lequel ledit sous-ensemble comprend le premier noeud et exclut le second noeud.

9. Procédé selon la revendication 1, dans lequel ladite modification de la carte thermique (110) est basée sur un type dudit accès.

10. Procédé selon la revendication 1 ou la revendication 9, dans lequel ladite modification de la carte thermique (110) comprend un hachage.

11. Procédé selon la revendication 1, comprenant en outre l'enregistrement, en réponse à ladite demande dudit accès en écriture, d'identifiants : du premier noeud et d'au moins un bloc de données parmi le ou les blocs de données.

12. Procédé selon la revendication 1, dans lequel ledit ajustement du nombre minimal d'un ou plusieurs noeuds de duplication respectifs pour l'au moins un bloc de données comprend, pour l'au moins un bloc de données parmi le ou les blocs de données :
réduire ledit nombre minimal d'un ou plusieurs noeuds de duplication respectifs sur la base d'une quantité de demandes d'accès en écriture, et/ou
augmenter ledit nombre minimal d'un ou plusieurs noeuds de duplication respectifs sur la base d'une quantité de demandes d'accès en lecture.

13. Procédé selon la revendication 1 ou la revendication 12, dans lequel ledit ajustement du nombre minimal d'un ou plusieurs noeuds de duplication respectifs pour l'au moins un bloc de données comprend, pour l'au moins un bloc de données parmi le ou les blocs de données, un asynchronisme.

14. Procédé selon la revendication 1 ou la revendication 12 ou la revendication 13, dans lequel ledit ajustement du nombre minimal d'un ou plusieurs noeuds de duplication respectifs pour l'au moins un bloc de données comprend, pour l'au moins un bloc de données parmi le ou les blocs de données, la prédiction par un réseau bayésien d'une probabilité selon laquelle :
deux blocs de données feront l'objet d'un accès ensemble,
un bloc de données fera l'objet d'un accès car un autre bloc de données a fait l'objet d'un accès,
le premier noeud accédera à un bloc de données particulier, et/ou
un verrou sera libéré dans une certaine durée.

15. Support(s) de stockage non-transitoire(s) lisible(s) par ordinateur stockant des instructions qui, lorsqu'elles sont exécutées par un ou plusieurs processeurs (604), amènent le ou les processeurs à réaliser le procédé selon l'une quelconque des revendications 1 à 14.
